# EUROPEAN PATENT APPLICATION

(11) **EP 3 531 001 A1**
(43) Date of publication of application: **28.08.2019**
(21) Application number: 17861334.5
(22) Date of filing: 02.10.2017
(51) Int. Cl.: F16L 15/04, C25D 5/26, C25D 5/48, C25D 7/04

(54) **THREADED JOINT FOR PIPE AND METHOD FOR MANUFACTURING THREADED JOINT FOR PIPE**

(30) Priority: 18.10.2016 JP 2016204709
(71) Applicant: Nippon Steel & Sumitomo Metal Corporation, Tokyo 100-8071 (JP); Vallourec Oil and Gas France, 59620 Aulnoye-Aymeries (FR)
(72) Inventor: KIMOTO, Masanari, Tokyo 100-8071 (JP); OSHIMA, Masahiro, Tokyo 100-8071 (JP)
(74) Representative: J A Kemp
(86) International application number: PCT/JP2017/035859
(87) International publication number: WO 2018/074212

(57) **Abstract**

There is provided a threaded connection for pipe having an excellent galling resistance and an excellent appearance. A threaded connection for pipe according to the present embodiment includes a pin (3) and a box (4). The pin (3) and the box (4) have contact surfaces (34) and (44) that include thread parts (31) and (41), metal seal parts (32) and (42), and shoulder parts (33) and (43), respectively. The threaded connection for pipe includes a Zn-Ni alloy plating layer (100) on the contact surface (34) or (44) of at least one of the pin (3) and the box (4). The Zn-Ni alloy plating layer (100) contains Cu. The Cu content of the Zn-Ni alloy plating layer (100) is 4.5% by mass or less (zero excluded).

## Description

### TECHNICAL FIELD

The present invention relates to a threaded connection for pipe and a method for producing a threaded connection for pipe.

### BACKGROUND ART

For drilling an oil field or a natural gas field, oil country tubular goods are used. The oil country tubular goods are formed by coupling a plurality of steel pipes in proportion to the depth of a well. The steel pipes are coupled by fastening threaded connections for pipe formed at end portions of the steel pipes. The oil country tubular goods are drawn up and loosened for inspection or the like, and after the inspection, fastened again and reused.

A threaded connection for pipe includes a pin and a box. The pin includes an external thread part and an unthreaded metal contact part that are formed on an outer peripheral surface of an end portion of a steel pipe. The box includes an internal thread part and an unthreaded metal contact part that are formed on an inner peripheral surface of an end portion of a steel pipe. Each of the unthreaded metal contact parts includes a metal seal part and a shoulder part. In fastening the steel pipes, the external thread part and the internal thread part are brought into contact with each other, the metal seal parts are brought into contact with each other, and the shoulder parts are brought into contact with each other.

The thread parts and the unthreaded metal contact parts of the pin and the box repeatedly are subjected to strong friction in fastening and loosening the steel pipes. If these regions do not have a sufficient durability against friction, galling (unrepairable seizure) occurs when the fastening and loosening are repeated. Therefore, threaded connections for pipe are required to have a sufficient durability against friction, namely, an excellent galling resistance.

In conventional practices, to enhance galling resistance, a compound grease, which contains heavy metals, has been used. By applying the compound grease on the surface of a threaded connection for pipe, the galling resistance of the threaded connection for pipe can be improved. However, heavy metals such as Pb contained in the compound grease may have an influence on the environment. For this reason, there is a demand for developing a threaded connection for pipe for which no compound grease is used.

There are proposed threaded connections for pipe for which a grease containing no heavy metals (called green dope) is used in place of compound greases. For example, Japanese Patent Application Publication No. 2008-215473 (Patent Literature 1) and Japanese Patent Application Publication No. 2003-074763 (Patent Literature 2) describe threaded connections for pipe that are excellent in galling resistance even when a grease containing no heavy metals is used.

The threaded connection for steel pipe described in Japanese Patent Application Publication No. 2008-215473 (Patent Literature 1) is a threaded connection for steel pipe that includes a pin and a box each of which has a contact surface including a thread part and an unthreaded metal contact part. A feature of the threaded connection for steel pipe is that the contact surface of at least one of the pin and the box includes a first plating layer made of a Cu-Zn alloy. Patent Literature 1 describes that this feature allows sufficient leakage resistance and galling resistance to exert when a green dope is applied, or even when no dope is applied, and further allows an excellent corrosion resistance to exert, preventing the occurrence of crevice corrosion even when a green dope or a lubricating coating is present on a plating layer.

In a technique disclosed in Patent Literature 1, a specified alloy plating layer is formed on a contact surface, whereby galling resistance is enhanced even when a green dope is used.

The connection for oil country tubular goods described in Japanese Patent Application Publication No. 2003-074763 (Patent Literature 2) is a connection for oil country steel tubular goods that includes a pin part and a coupling, the pin part including an external thread and a metal-metal seal part in one end of a steel pipe that contains 9% by mass or more of Cr, the coupling being made of the same material and including, in both ends thereof, box portions each of which includes an internal thread and a metal-metal seal part. A feature of the connection for oil country tubular goods is that one Cu-Sn alloy layer is disposed on the surfaces of the internal thread and metal-metal seal part of the coupling. Patent Literature 2 describes that this feature makes the sealing ability of the connection better than those of conventional connections even when a green dope is used, and makes it possible to dramatically suppress galling in the connection.

International Application Publication No. WO2016/170031 (Patent Literature 3) proposes a technique in which a plating layer having a high corrosion resistance is formed, whereby a galling resistance, as well as a corrosion resistance, is increased. A threaded connection for pipe described in International Application Publication No. WO2016/170031 (Patent Literature 3) includes a threaded part and a first seal surface, and the threaded part and the first seal surface are covered with a metallic corrosion-resistant galling-resistant layer that contains zinc (Zn) as a principal component in terms of weight.

### CITATION LIST

### PATENT LITERATURE

Patent Literature 1: Japanese Patent Application Publication No. 2008-215473
Patent Literature 2: Japanese Patent Application Publication No. 2003-074763
Patent Literature 3: International Application Publication No. WO2016/170031

### SUMMARY OF INVENTION

### TECHNICAL PROBLEM

Now, once transported to a mining site, a threaded connection for pipe is usually kept unfastened in storage until actually used. In other words, the threaded connection for pipe is in storage for a specified period before use. If the appearance of a plating layer of the threaded connection for pipe is inferior to the appearance of a conventional plating layer or there is unevenness or the like, the user may be concerned about contamination of foreign materials and deterioration in performance. In this case, the threaded connection for pipe may be required to have an appearance as good as or better than conventional plating.

Using the techniques described in aforementioned Patent Literature 1 to Patent Literature 3 enables the galling resistance of a threaded connection for pipe to be improved. However, threaded connections for pipe have been required to have a further enhanced galling resistance. Furthermore, a threaded connection for pipe having a good appearance has been desired.

An objective of the present invention is to provide a threaded connection for pipe having an excellent galling resistance and an excellent appearance, and to provide a method for producing the threaded connection for pipe.

### SOLUTION TO PROBLEM

A threaded connection for pipe according to the present embodiment includes a pin and a box. The pin and the box each have a contact surface that includes a thread part, a metal seal part, and a shoulder part. The threaded connection for pipe includes, on a contact surface of at least one of the pin and the box, a Zn-Ni alloy plating layer. The Zn-Ni alloy plating layer contains Cu. The Cu content of the Zn-Ni alloy plating layer is 4.5% by mass or less (zero excluded).

A method for producing a threaded connection for pipe according to the present embodiment is a method for producing a threaded connection for pipe including a pin and a box. The pin and the box each have a contact surface that includes a thread part, a metal seal part, and a shoulder part. The production method includes a preparing step and a Zn-Ni alloy plating layer forming step. In the preparing step, a pin, a box, and a plating solution are prepared. The plating solution contains zinc ions, nickel ions, and copper ions. The concentration of copper ions in the plating solution is 1 g/L or less (zero excluded). In the Zn-Ni alloy plating layer forming step, a Zn-Ni alloy plating layer is formed by electroplating bringing the plating solution into contact with the contact surface of at least one of the pin and the box.

### ADVANTAGEOUS EFFECT OF INVENTION

A threaded connection for pipe according to the present embodiment has an excellent galling resistance and an excellent appearance.

### BRIEF DESCRIPTION OF DRAWINGS

FIG. 1 is a graph illustrating the relation between content of Cu in a Zn-Ni alloy plating layer and hardness of the Zn-Ni alloy plating layer.
FIG. 2 is an enlarged graph illustrating a portion of FIG. 1 corresponding to a range of Cu content from 0.00 to 0.10% by mass.
FIG. 3 is a graph illustrating the relation among content of Cu in a Zn-Ni alloy plating layer, L value of the Zn-Ni alloy plating layer, and hardness of the Zn-Ni alloy plating layer.
FIG. 4 is a diagram illustrating the configuration of a threaded connection for pipe according to the present embodiment.
FIG. 5 is a cross-sectional view of the threaded connection for pipe according to the present embodiment.
FIG. 6 is a cross-sectional view of an example of contact surfaces of the threaded connection for pipe according to the present embodiment.

### DESCRIPTION OF EMBODIMENTS

The present embodiment will be described below in detail with reference to the accompanying drawings. The same or equivalent elements will be denoted by the same reference numerals and the description thereof will not be repeated.

The present inventors conducted studies about galling resistance and appearance of a threaded connection for pipe. Consequently, the following findings were obtained.

Patent Literature 3 describes a study on use of zinc (Zn) plating or zinc alloy plating, especially, Zn-Ni alloy plating for a threaded connection for pipe. The Zn-Ni alloy plating has a high hardness and a high fusing point. If a plating layer has a high hardness, the plating layer is less likely to be damaged in fastening and loosening of a threaded connection for pipe. Furthermore, if a plating layer has a high fusing point, decrease in the hardness of the plating layer can be inhibited even when the plating layer locally reaches a high temperature in fastening and loosening a threaded connection for pipe. As a result, the galling resistance of the threaded connection for pipe is increased. Therefore, forming a plating layer using a Zn-Ni alloy increases the galling resistance of a threaded connection for pipe.

Patent Literature 3 describes that Zn-Ni alloy plating further provides an excellent corrosion resistance. Therefore, forming a plating layer using a Zn-Ni alloy increases, in addition to the galling resistance, the corrosion resistance of a threaded connection for pipe.

The present inventors conducted studies about a method for further increasing the galling resistance of a Zn-Ni alloy plating layer. Consequently, the following findings were obtained.

In conventional practices, in a Zn-Ni alloy plating layer, metals other than zinc (Zn) and nickel (Ni) have been considered to be impurities. In the plating industry, impurities in plating are generally considered to be likely to cause poor plating. The poor plating includes, for example, poor appearance and poor physical property. The poor appearance includes, for example, pits, rough deposits, dull deposits, irregular appearance, and bare spot. The physical property includes, for example, decrease in hardness, decrease in ductility, decrease in adhesiveness, and decrease in corrosion resistance, of a plating layer. In order to inhibit the poor plating, reducing impurities in plating has been attempted.

However, the present inventors obtained a finding that is totally different from conventional findings. The finding is that containing Cu, which has been considered to be an impurity, in a Zn-Ni alloy plating layer under specific conditions increases the hardness of the Zn-Ni alloy plating layer.

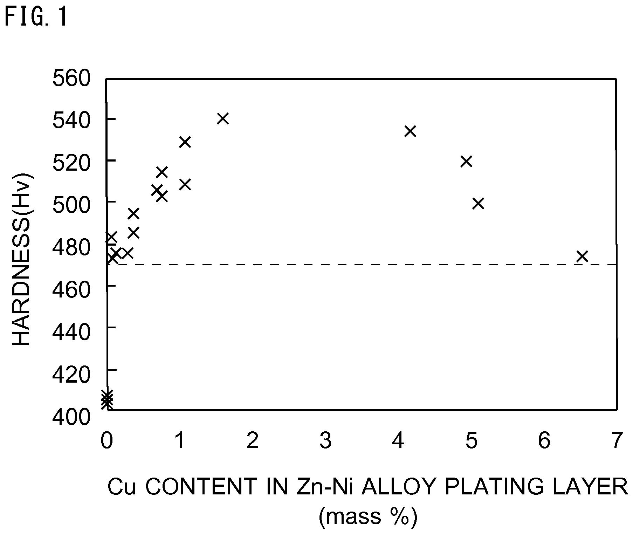

FIG. 1 is a graph illustrating the relation between content of Cu in a Zn-Ni alloy plating layer (hereafter, simply referred to as a Cu content) and hardness of the Zn-Ni alloy plating layer. FIG. 1 is obtained through an example to be described later.

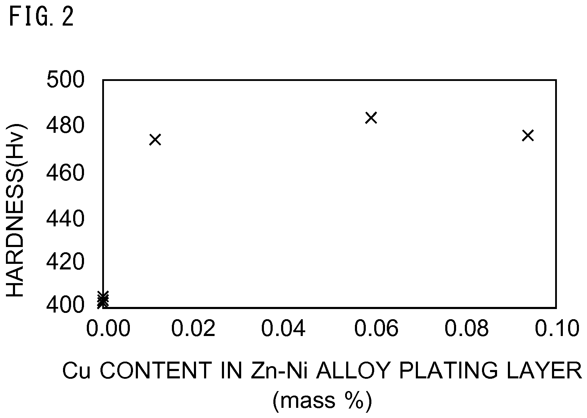

The ordinate of FIG. 1 represents changes in hardness (Hv) of the Zn-Ni alloy plating layer in the example to be described later. The hardness of the Zn-Ni alloy plating layer can be obtained by a test method to be described later. The galling resistance of the threaded connection for pipe increases as the hardness of the Zn-Ni alloy plating layer increases. FIG. 2 is an enlarged graph illustrating a portion of FIG. 1 corresponding to a range of Cu content from 0.00 to 0.10% by mass. Referring to FIG. 2, when the Cu content becomes more than 0% by mass, the hardness of the Zn-Ni alloy plating layer remarkably increases. In FIG. 1 and FIG. 2, when the Cu content is 0.01% by mass or more, the hardness of the Zn-Ni alloy plating layer is 470 Hv or more, providing a higher galling resistance can be obtained.

As described above, Patent Literature 3 describes that Zn-Ni alloy plating is used for a threaded connection for pipe in the expectation that the corrosion resistance would increase. The reason would be that zinc (Zn) is a base metal in comparison with iron (Fe), which is contained in a large amount in the base material of the threaded connection for pipe, and thus zinc causes sacrificial protection. Specifically, from the viewpoint of corrosion resistance, copper (Cu), which is a noble metal in comparison with iron (Fe), would be one of elements that particularly need to be reduced from the Zn-Ni alloy plating layer. However, the present inventors found that copper (Cu) is a rather preferable element, from the viewpoint of galling resistance.

As described above, a threaded connection for pipe may be required to have a good appearance during a storage period before use. In a case of containing Cu in a Zn-Ni alloy plating layer, the hardness of the Zn-Ni alloy plating layer remarkably increases. Meanwhile, the present inventors found that Cu contained in the Zn-Ni alloy plating layer in a large amount influences the appearance of a threaded connection for pipe.

When Cu contained in the Zn-Ni alloy plating layer is at 4.5% by mass or less, the appearance of the Zn-Ni alloy plating layer is improved. The quality of the appearance is determined in terms of irregular appearance of the Zn-Ni alloy plating layer. When the irregular appearance of the Zn-Ni alloy plating layer is large (i.e., the appearance of the Zn-Ni alloy plating layer is poor), the L value of the Zn-Ni alloy plating layer generally tends to be low. Accordingly, the appearance of the Zn-Ni alloy plating layer is determined in terms of L value. The higher the L value is, the better the appearance is determined to be.

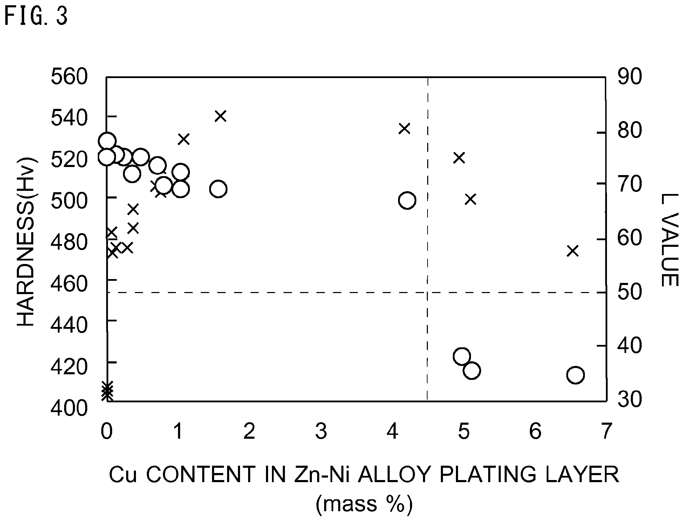

FIG. 3 is a graph illustrating the relation among Cu content in a Zn-Ni alloy plating layer, hardness of the Zn-Ni alloy plating layer, and L value of the Zn-Ni alloy plating layer. FIG. 3 is obtained through an example to be described later. The ordinate on the left side of FIG. 3 represents changes in hardness of the Zn-Ni alloy plating layer in the example to be described later. In FIG. 3, marks × indicate the hardness of the Zn-Ni alloy plating layer. The ordinate on the right side of FIG. 3 represents changes in L value of the Zn-Ni alloy plating layer in the example to be described later. In FIG. 3, white-circle marks (O) indicate the L value. In the present embodiment, the appearance is evaluated to be good when an L value is more than 50.0. Referring to FIG. 3, the L value increases as the Cu content decreases. In other words, controlling the Cu content to be a given value or less allows a state of good appearance to be kept.

Referring to FIG. 3, a Cu content of 4.5% by mass or less (zero excluded) makes the L value more than 50.0, providing a sufficiently good appearance. In this case, the threaded connection for pipe has an excellent galling resistance as well as an excellent appearance.

A threaded connection for pipe according to the present embodiment completed based on the above findings includes a pin and a box. The pin and the box each have a contact surface that includes a thread part, a metal seal part, and a shoulder part. The threaded connection for pipe includes a Zn-Ni alloy plating layer on a contact surface of at least one of the pin and the box. The Zn-Ni alloy plating layer contains Cu. The Cu content of the Zn-Ni alloy plating layer is 4.5% by mass or less (zero excluded).

The Zn-Ni alloy plating layer of the threaded connection for pipe in the present embodiment contains Cu. The Cu content of the Zn-Ni alloy plating layer is 4.5% by mass or less (zero excluded). This case can make an excellent galling resistance compatible with an excellent appearance in the threaded connection for pipe.

It is preferable that the Cu content in the Zn-Ni alloy plating layer is 0.05 to 4.5% by mass.

In this case, the galling resistance of the threaded connection for pipe further increases.

The thickness of the Zn-Ni alloy plating layer may be 1 to 20 µm.

The threaded connection for pipe in the present embodiment may include a lubricating coating on a contact surface of at least one of the pin and the box, or on the Zn-Ni alloy plating layer.

A method for producing the threaded connection for pipe according to the present embodiment is a method for producing a threaded connection for pipe including a pin and a box. The pin and the box each have a contact surface that includes a thread part, a metal seal part, and a shoulder part. The producing method includes a preparing step and a Zn-Ni alloy plating layer forming step. In the preparing step, the pin, the box, and a plating solution are prepared. The plating solution contains zinc ions, nickel ions, and copper ions. The concentration of copper ions in the plating solution is 1 g/L or less (zero excluded). In the Zn-Ni alloy plating layer forming step, a Zn-Ni alloy plating layer is formed by electroplating bringing the plating solution into contact with a contact surface of at least one of the pin and the box.

Description will be made below about a threaded connection for pipe according to the present embodiment and a method for producing the threaded connection for pipe.

### [Threaded Connection for Pipe]

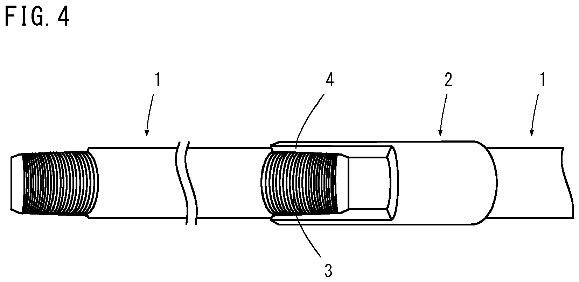

A threaded connection for pipe includes a pin and a box. FIG. 4 is a diagram illustrating the configuration of a threaded connection for pipe according to the present embodiment. Referring to FIG. 4, the threaded connection for pipe includes a steel pipe 1 and a coupling 2. At the both ends of the steel pipe 1, a pin 3 is formed that includes an external thread part on its outer surface. At the both ends of the coupling 2, a box 4 is formed that includes an internal thread part on its inner surface. By fastening the pin 3 and the box 4, the coupling 2 is attached to an end of the steel pipe 1. Besides, there is an integral-type threaded connection for oil country tubular goods, which does not include a coupling 2 but includes a pin 3 provided at one end of the steel pipe 1 and a box 4 provided at the other end of the steel pipe 1. The threaded connection for pipe according to the present embodiment is available for both of coupling-type threaded connections for pipe and integral-type threaded connections for pipe.

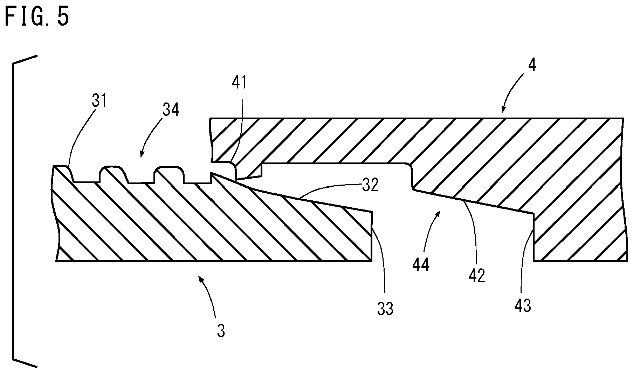

The pin 3 and the box 4 each have a contact surface that includes a thread part, a metal seal part, and a shoulder part. FIG. 5 is a cross-sectional view of the threaded connection for pipe according to the present embodiment. Referring to FIG. 5, the pin 3 includes an external thread part 31, a metal seal part 32, and a shoulder part 33. The box 4 includes an internal thread part 41, a metal seal part 42, and a shoulder part 43. The parts that come into contact with each other when the pin 3 and the box 4 are fastened are referred to as contact surfaces 34 and 44. Specifically, when the pin 3 and the box 4 are fastened, the thread parts (the external thread part 31 and the internal thread part 41) come into contact with each other, the metal seal parts (the metal seal parts 32 and 42) come into contact with each other, and the shoulder parts (the shoulder parts 33 and 43) come into contact with each other. In other words, the contact surface 34 includes the thread part 31, the metal seal part 32, and the shoulder part 33. The contact surface 44 includes the thread part 41, the metal seal part 42, and the shoulder part 43.

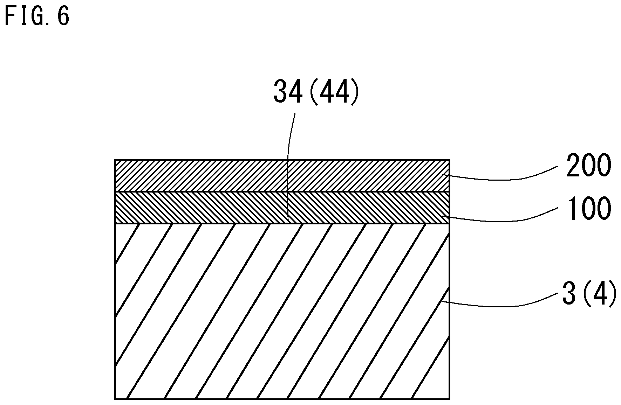

FIG. 6 is a cross-sectional view of an example of the contact surfaces 34 and 44 of the threaded connection for pipe according to the present embodiment. The threaded connection for pipe includes a Zn-Ni alloy plating layer 100 on at least one of the contact surface 34 of the pin 3 and the contact surface 44 of the box 4. In FIG. 6, the threaded connection for pipe includes a Zn-Ni alloy plating layer 100 on the contact surface 34 of the pin 3. The threaded connection for pipe may further include lubricating coatings 200 on the Zn-Ni alloy plating layer 100. The Zn-Ni alloy plating layer 100 may be provided on the contact surface 44 of the box 4, rather than the pin 3. The Zn-Ni alloy plating layer 100 may be provided on each of the contact surface 34 of the pin 3 and the contact surface 44 of the box 4. This has of course a cost disadvantageous.

### [Zn-Ni Alloy Plating Layer]

The Zn-Ni alloy plating layer 100 is disposed on a contact surface 34 or 44 of at least one of the pin 3 and the box 4. The Zn-Ni alloy plating layer 100 is consisting of a Zn-Ni alloy, copper (Cu), and impurities. The Zn-Ni alloy plating layer 100 has a composition in which the proportion of Ni is 6 to 20% by mass, assuming that the entire Zn-Ni alloy plating layer 100 is 100% by mass. The lower limit of the proportion of Ni is preferably 10% by mass, more preferably 12% by mass. The upper limit of the proportion of Ni is preferably 16% by mass.

The Zn-Ni alloy plating layer 100 contains Cu. The Cu content in the Zn-Ni alloy plating layer 100 is 4.5% by mass or less (zero excluded), assuming that the entire Zn-Ni alloy plating layer 100 is 100% by mass. Even a trace quantity of Cu in the Zn-Ni alloy plating layer 100 increases the hardness and the fusing point of the Zn-Ni alloy plating layer 100 as a whole. Specifically, the Cu content in the Zn-Ni alloy plating layer 100 is more than 0%. Meanwhile, when the Cu content in the Zn-Ni alloy plating layer 100 is at 4.5% by mass or less, a state of good appearance of the Zn-Ni alloy plating layer 100 can be kept. Therefore, the Cu content in the Zn-Ni alloy plating layer 100 is 4.5% by mass or less (zero excluded). This case can make an excellent galling resistance compatible with an excellent appearance in the threaded connection for pipe. The lower limit of the Cu content in the Zn-Ni alloy plating layer 100 is preferably 0.01% by mass, more preferably 0.05% by mass, still more preferably 0.10% by mass, still more preferably 1.00% by mass, still more preferably 1.10% by mass. The upper limit of the Cu content in the Zn-Ni alloy plating layer 100 is preferably 4.0% by mass.

The balance of the Zn-Ni alloy plating layer 100 is zinc (Zn) and impurities. Specifically, the Zn-Ni alloy plating layer 100 is consisting of 6 to 20% by mass of Ni, 4.5% by mass or less (zero excluded) of Cu, and the balance being Zn and impurities. The impurities include, for example, Fe. In the Zn-Ni alloy plating layer 100, the total content of the impurities other than Cu is less than 0.1% by mass.

### [Method for Measuring Composition of Zn-Ni Alloy Plating Layer]

The composition of the Zn-Ni alloy plating layer 100 is measured using energy dispersive X-rays (EDX). Specifically, a specimen is cut out so as to be perpendicular to a surface of the Zn-Ni alloy plating layer 100, embedded in a resin, and polished. On a cross section of the Zn-Ni alloy plating layer 100, an elementary composition is analyzed using a SEM (ERA-8900FE) manufactured by Erionix Corporation / an EDS device (Pegasus) manufactured by EDAX. Assuming that the proportion of all the detected elements is 100% by mass, the proportions (% by mass) of elements (Ni and Cu) are calculated.

The thickness of the Zn-Ni alloy plating layer 100 is not particularly limited. The thickness of the Zn-Ni alloy plating layer 100 is, for example, 1 to 20 µm. When the thickness of the Zn-Ni alloy plating layer 100 is 1 µm or more, sufficient galling resistance can be obtained stably. When the thickness of the Zn-Ni alloy plating layer 100 becomes more than 20 µm, the above effect is however saturated.

The thickness of the Zn-Ni alloy plating layer 100 is measured by the following method. At four spots on the contact surfaces 34 and 44 on each of which the Zn-Ni alloy plating layer 100 is formed, the thickness of the Zn-Ni alloy plating layer 100 is measured using a phase-sensitive eddy-current thicknessmeter PHASCOPE PMP910 from Helmut Fischer GmbH. The measurement is performed by a method following International Organization for Standardization (ISO) 21968(2005). The spots of the measurement are four spots on the threaded connection for pipe in a pipe circumferential direction (four spots of 0°, 90°, 180°, and 270°). The arithmetic mean of the results of the measurement at the four spots is determined as the thickness of the Zn-Ni alloy plating layer 100.

The Zn-Ni alloy plating layer 100 may be disposed partially or entirely on at least one of the contact surfaces 34 and 44. The metal seal parts 32 and 42 are subjected to a high interfacial pressure in particular in a final phase of the fastening. Therefore, in the case of disposing the Zn-Ni alloy plating layer 100 partially on at least one of the contact surfaces 34 and 44, it is preferable to dispose the Zn-Ni alloy plating layer 100 on one of the metal seal parts 32 and 42. Meanwhile, when the Zn-Ni alloy plating layer 100 is disposed entirely on at least one of the contact surfaces 34 and 44, the production efficiency of the threaded connection for pipe is increased.

The hardness of the Zn-Ni alloy plating layer 100 is higher than the hardness of a Cu plating layer, which has been used as a plating layer for threaded connections for pipe in conventional practice, and the fusing point of the Zn-Ni alloy plating layer 100 is as high as the fusing point of the Cu plating layer. Therefore, even when fastening and loosening are repeated, damage to the Zn-Ni alloy plating layer 100 is inhibited. Consequently, the galling resistance is kept even when fastening and loosening are repeated.

Furthermore, zinc (Zn) contained in the Zn-Ni alloy plating layer 100 is a base metal in comparison with iron (Fe), which is the principal component of the steel pipe. Therefore, the Zn-Ni alloy plating layer 100 has the effect of sacrificial protection, increasing the corrosion resistance of the threaded connection for pipe.

### [Lubricating Coating]

The threaded connection for pipe may include a lubricating coating 200 on the Zn-Ni alloy plating layer 100. As shown in FIG. 6, the lubricating coating 200 may be disposed on the Zn-Ni alloy plating layer 100. In a case where the Zn-Ni alloy plating layer 100 is disposed on only one of the contact surface 34 of the pin 3 and the contact surface 44 of the box 4, the lubricating coating 200 may be disposed directly on one of the contact surface 34 of the pin 3 and the contact surface 44 of the box 4.

The lubricating coating 200 may be in any one of a liquid state, a semisolid state, and a solid state. Here, the semisolid state refers to a state in which the lubricating coating 200 can flow on the contact surfaces 34 and 44 under an external load (pressure, heat, etc.) while changing its shape freely, as with liquid. Examples in the liquid state or the semisolid state include high-viscosity substances such as grease.

The lubricating coating 200 contains a well-known lubricant. Examples of the lubricant include SEAL-GUARD (trade name) ECF (trade name) from JET-LUBE Inc. The lubricating coating 200 may be, for example, a well-known lubricating coating that contains a lubricating particle and a binding agent. The lubricating coating 200 may contain a solvent and other constituents as necessary. Examples of the lubricating coating 200 include a lubricant that contains a rosin, a metallic soap, a wax, and a lubricant powder. The lubricant powder is, for example, an earthy graphite. The chemical compositions of the lubricating coating 200 disposed on the pin 3 and the chemical compositions of the lubricating coating 200 disposed on the box 4 may be the same or different.

The thickness of the lubricating coating 200 is not particularly limited. The thickness of the lubricating coating 200 is, for example, 30 to 300 µm. When the thickness of the lubricating coating 200 is 30 µm or more, the effect of decreasing the shouldering torque is further increased. When the thickness of the lubricating coating 200 becomes more than 300 µm, the above effect is however saturated because a surplus of the lubricating coating 200 is removed from the contact surfaces 34 and 44 in the fastening.

When the lubricating coating 200 is in a solid state, the thickness of the lubricating coating 200 is measured by the following method. Pin 3 or box 4 with lubricating coating 200 is prepared. Pin 3 or box 4 is cut perpendicular to the axial direction of the pipe. A microscope observation is performed on a cross section including the lubricating coating 200. The magnification of microscopic observation is 500 times. The film thickness of the lubricating coating 200 is determined by the microscopic observation.

When the lubricating coating 200 is in a liquid state or a semisolid state, the thickness of the lubricating coating 200 is measured by the following method. Any measurement point (area: 5 mm × 20 mm) of the metal seal part 32 or 42 of the threaded connection for pipe is wiped off with cotton wool impregnated with ethanol. The application amount of the lubricant is calculated from the difference between the weight of the cotton wool before wiping and the weight of the cotton wool after wiping. The average coating thickness of the lubricating coating 200 is calculated from the application amount of the lubricant, the density of the lubricant, and the area of the measurement point.

The lubricating coating 200 may be in any one of a liquid state, a semisolid state, and a solid state. However, using the lubricating coating 200 in a liquid state or a semisolid state allows a torque occurring in the contact between the shoulder part 33 and the shoulder part 43 (shouldering torque) to be decreased. In this case, a torque occurring in fastening is easy to adjust.

### [Arrangement of Zn-Ni alloy plating layer and lubricating coating]

The combination is not particularly limited as long as the Zn-Ni alloy plating layer 100 is disposed on the contact surfaces 34 or 44 of at least one of the pin 3 and the box 4, and the lubricating coating 200 is disposed on the contact surfaces 34 or 44 of at least one of the pin 3 and the box 4 or on the Zn-Ni alloy plating layer 100. A case where only the Zn-Ni alloy plating layer 100 is disposed is referred to as a pattern 1. A case where the Zn-Ni alloy plating layer 100 is disposed and further the lubricating coating 200 is disposed thereon is referred to as a pattern 2. A case where only the lubricating coating 200 is disposed is referred to as a pattern 3. A case where the Zn-Ni alloy plating layer 100 nor the lubricating coating 200 are neither disposed is referred to as a pattern 4. If the above conditions are satisfied, the contact surface 34 of the pin 3 and the contact surface 44 of the box 4 may be any of the patterns 1 to 4. Specifically, when the contact surface 34 of the pin 3 is the pattern 1 or the pattern 2, the contact surface 44 of the box 4 may be any of the patterns 1 to 4. Also, when the contact surface 34 of the pin 3 is the pattern 3 or the pattern 4, the contact surface 44 of the box 4 is either the pattern 1 or the pattern 2. Conversely, when the contact surface 44 of the box 4 is the pattern 1 or the pattern 2, the contact surface 34 of the pin 3 may be any of the patterns 1 to 4. Also, when the contact surface 44 of the box 4 is the pattern 3 or the pattern 4, the contact surface 34 of the pin 3 is either the pattern 1 or the pattern 2.

### [Base metal of Threaded Connection for Pipe]

The chemical composition of a base metal of the threaded connection for pipe is not particularly limited. Examples of the base metal include carbon steels, stainless steels, and alloy steels. Of the alloy steels, high alloy steels such as duplex stainless steels containing alloying elements such as Cr, Ni, and Mo and Ni alloys has high anticorrosion properties. Therefore, when these high alloy steels are used as the base metal, the corrosion resistance of the threaded connection for pipe is increased.

### [Producing Method]

The method for producing a threaded connection for pipe according to the present embodiment is a method for producing the threaded connection for pipe mentioned before. The producing method includes a preparation step and a Zn-Ni alloy plating layer 100 forming step.

### [Preparation Step]

In the preparation step, the pin 3, the box 4, and a plating solution are prepared. The plating solution contains zinc ions, nickel ions, and copper ions. The plating solution preferably contains zinc ion: 1 to 100 g/L and nickel ion: 1 to 50 g/L. The plating solution further contains copper ions. The content of the copper ions contained in the plating solution is 1 g/L or less (zero excluded). The lower limit of the content of the copper ions in the plating solution is preferably 10 ppm, more preferably 50 ppm, still more preferably 100 ppm.

### [Zn-Ni Alloy Plating Layer Forming Step]

In the Zn-Ni alloy plating layer 100 forming step, the Zn-Ni alloy plating layer 100 made of a Zn-Ni alloy is formed on a contact surface of at least one of the pin 3 and the box 4. The Zn-Ni alloy plating layer 100 is formed by plating. The plating is performed by electroplating bringing the contact surface of at least one of the pin 3 and the box 4 into contact with the plating solution containing zinc ions, nickel ions and copper ions. The conditions for the electrolytic plating can be set as appropriate. The conditions for the electrolytic plating are, for example, a plating solution pH: 1 to 10, a plating solution temperature: 10 to 60°C, a current density: 1 to 100 A/dm², and a time period of the treatment: 0.1 to 30 minutes.

### [Coating Forming Step]

After the Zn-Ni alloy plating layers 100 mentioned above are formed on the contact surfaces 34 or 44 of at least one of the pin 3 and the box 4, the coating forming step may be performed. In the coating forming step, the lubricating coating 200 is formed on at least one of the contact surfaces 34 and 44 of the pin 3 and the box 4, or on the Zn-Ni alloy plating layer 100.

The lubricating coating 200 is formed by applying the lubricant mentioned above. The method for the application is not particularly limited. Examples of the method for the application include spray application, brush application, and immersion. In the case of adopting the spray application, the lubricant may be sprayed while being heated and increased in fluidity. The lubricating coating 200 may formed partially on at least one selected from the group consisting of the contact surface 34 of the pin 3, the contact surface 44 of the box 4, the Zn-Ni alloy plating layer 100 on the contact surface 34 of the pin 3 and the Zn-Ni alloy plating layer 100 on the contact surface 44 of the box 4. However, the lubricating coating 200 preferably formed entirely on at least one selected from the group consisting of the contact surface 34 of the pin 3, the contact surface 44 of the box 4, the Zn-Ni alloy plating layer 100 on the contact surface 34 of the pin 3 and the Zn-Ni alloy plating layer 100 on the contact surface 44 of the box 4. The coating forming step may be performed on one or both of the pin 3 and the box 4.

### [Preconditioning Treatment Step]

The producing method may include a preconditioning treatment step before the Zn-Ni alloy plating layer 100 forming step, as necessary. Examples of the preconditioning treatment step include pickling and alkaline degreasing. In the preconditioning treatment step, oil content and the like adhered to the contact surface 34 or 44 is removed. The preconditioning treatment step may further include grinding work such as sandblast and mechanical grinding finishing. Only one of these preconditioning treatments may be performed, or more than one of these preconditioning treatments may be performed in combination.

### EXAMPLES

Hereinafter, examples will be described. In addition, the symbol"%" in the examples means mass percent.

In the present embodiment, a commercial cold-rolled steel plate was used, which was assumed to be a base metal of the threaded connection. The cold-rolled steel plate measured 150 mm long × 100 mm wide (plating surface measured 100 mm long × 100 mm wide). The steel grade of the cold-rolled steel plate was an ultra-low carbon steel. The chemical composition of the steel plate was C: 0.19%, Si: 0.25%, Mn: 0.8%, P: 0.02%, S: 0.01%, Cu: 0.04%, Ni: 0.1%, Cr: 13%, Mo: 0.04%, and the balance: Fe and impurities.

### [Zn-Ni Alloy Plating Layer Forming Step]

On the cold-rolled steel plate of each test number, a plating layer was formed. The formation of the Zn-Ni alloy plating layer was performed by electrolytic plating. The detailed producing conditions for the Zn-Ni alloy plating layer of each test number were those shown in Table 1. As the plating solution, use was made of trade name: DAIN Zinalloy N-PL from Daiwa Fine Chemicals Co., Ltd. The Cu concentration in the plating solution was changed by changing an amount of a copper sulfate (pentahydrate) reagent added to the plating solution. Note that numeric values of the Cu concentration in the plating solution shown in Table 1 are target values, and the value of the Cu concentration in the plating solution being 0 ppm means a case where the aforementioned copper sulfate reagent was not added to the plating solution. In Table 1, solution flow rate is agitation speed of the plating solution, which is a value of a circulation amount of the plating solution circulated by a pump and expressed in terms of the linear velocity of the plating solution.

### [Table 1]

**TABLE 1**

| No. | Producing conditions for Zn-Ni alloy plating layer | | | | Zn-Ni alloy plating layer | | | | | |
|---|---|---|---|---|---|---|---|---|---|---|
| | Cu concentration in plating solution (ppm) | solution flow rate (m/s) | Current density (A/dm²) | Energizing time (s) | Ni content (wt%) | Cu content (wt%) | Thickness (µm) | Appearance properties | | Coating hardness (Hv) |
| | | | | | | | | L value | Quality | |
| 1 | 0 | 0.5 | 4 | 520 | 12.9 | 0.00 | 7.7 | 77.8 | OK | 405 |
| 2 | 0 | 0.5 | 6 | 345 | 12.8 | 0.00 | 7.8 | 77.1 | OK | 402 |
| 3 | 0 | 0.8 | 4 | 560 | 12.9 | 0.00 | 8.1 | 75.7 | OK | 404 |
| 4 | 10 | 0.5 | 4 | 520 | 13.0 | 0.01 | 7.7 | 77.8 | OK | 474 |
| 5 | 10 | 0.5 | 6 | 345 | 13.1 | 0.06 | 7.7 | 75.9 | OK | 483 |
| 6 | 10 | 0.8 | 4 | 560 | 12.9 | 0.09 | 8.4 | 75.9 | OK | 476 |
| 7 | 10 | 0.8 | 6 | 350 | 13.0 | 0.20 | 7.7 | 74.8 | OK | 476 |
| 8 | 50 | 0.5 | 4 | 520 | 13.0 | 0.39 | 7.4 | 74.9 | OK | 495 |
| 9 | 50 | 0.5 | 6 | 345 | 13.3 | 0.33 | 7.4 | 72.6 | OK | 486 |
| 10 | 50 | 0.8 | 4 | 560 | 13.2 | 0.70 | 7.8 | 72.8 | OK | 505 |
| 11 | 50 | 0.8 | 6 | 350 | 13.2 | 0.76 | 7.3 | 69.8 | OK | 503 |
| 12 | 100 | 0.5 | 4 | 520 | 13.2 | 1.06 | 7.1 | 72.1 | OK | 509 |
| 13 | 100 | 0.5 | 6 | 345 | 13.0 | 0.74 | 7.5 | 69.3 | OK | 515 |
| 14 | 100 | 0.8 | 4 | 560 | 12.8 | 1.59 | 8.0 | 69.0 | OK | 541 |
| 15 | 100 | 0.8 | 6 | 350 | 12.8 | 1.06 | 7.6 | 69.5 | OK | 530 |
| 16 | 500 | 0.5 | 4 | 520 | 12.3 | 6.55 | 3.1 | 35.1 | NG | 475 |
| 17 | 500 | 0.5 | 6 | 345 | 12.8 | 4.17 | 6.5 | 67.1 | OK | 535 |
| 18 | 500 | 0.8 | 4 | 560 | 11.9 | 4.96 | 1.8 | 38.1 | NG | 517 |
| 19 | 500 | 0.8 | 6 | 350 | 12.1 | 5.09 | 2.8 | 36.0 | NG | 499 |

### [Test of Measuring Cu Content in Zn-Ni Alloy Plating Layer]

The Cu content in the Zn-Ni alloy plating layer was measured using energy dispersive X-rays (EDX). Specifically, a specimen was cut out so as to be perpendicular to a surface of the Zn-Ni alloy plating layer, embedded in a resin, and polished. On a cross section of the specimen, an elementary composition was analyzed using the EDX. Of the obtained composition of elements, the ratio of a Cu amount (in mass percent) was calculated and determined to be the Cu content in the Zn-Ni alloy plating layer. The contents of the other elements were calculated similarly. In the present example, a Ni content was also calculated similarly. In the present example, the amount of the impurities in the Zn-Ni alloy plating layer was less than 0.1% by mass, and the balance was Zn. The results of the measurement are shown in Table 1.

### [Test of Measuring Thickness of Zn-Ni Alloy Plating Layer]

By the aforementioned measuring method, the thickness of the Zn-Ni alloy plating layer was measured. The results of the measurement are shown in Table 1.

### [Appearance Evaluation Test]

An appearance evaluation test was conducted in conformity with JIS Z8730 (2009). Specifically, CR-300 from Konica Minolta, Inc was used and an average value was calculated for an n number set to two. A measured area was set at ϕ10 mm. The L*a*b* color system was used to express Numeric values, and the L value representing luminance was used as an index. The results of the evaluation are shown in Table 1. In Table 1, when the L value was equal to or more than 50.0, the appearance was determined to be excellent, and OK was written in the column of "QUALITY" in "APPEARANCE PROPERTIES". In Table 1, when the L value was less than 50.0, the appearance was determined to be poor, NG was written in the column of "QUALITY" in "APPEARANCE PROPERTIES".

### [Test of Measuring Hardness of Zn-Ni Alloy Plating Layer]

By the Vickers hardness measurement test, the hardness of the Zn-Ni alloy plating layer was measured. Specifically, the cold-rolled steel plate of each test number on which the Zn-Ni alloy plating layer was formed were cut perpendicular to the surface of the steel plate. The Vickers hardness was measured for any five points of the cross section of the Zn-Ni alloy plating layer that appeared by a method in conformity with JIS Z 2244(2009). For the measurement, Fischer scope HM 2000 microhardness tester manufactured by Fischer Instruments Co., Ltd. was used. A test temperature was a normal temperature (25°C), and a test force (F) was 0.01 N. The arithmetic average of the three points which exclude the maximum value and the minimum value among the obtained five measurement results was taken as the hardness of the Zn-Ni alloy plating layer (Vickers hardness Hv (Hv 0.001)). The results are shown in Table 1.

### [Result of Evaluation]

Referring to Table 1, the cold-rolled steel plates of test number 4 to test number 15 and test number 17 each included the Zn-Ni alloy plating layer. The Zn-Ni alloy plating layer contained Cu. The Cu content of the Zn-Ni alloy plating layer was 4.5% by mass or less (zero excluded). Therefore, the hardnesses Hv were 470 or more, the L values were 50.0 or more, and thus the cold-rolled steel plates had excellent galling resistances and excellent appearances.

Furthermore, in test number 5 to test number 15, and test number 17, the Cu contents of the Zn-Ni alloy plating layers were from 0.05 to 4.5% by mass. Therefore, in comparison with test number 4, in which the Cu content of the Zn-Ni alloy plating layer was less than 0.05% by mass, the hardnesses increased, resulting in more excellent galling resistances.

Meanwhile, in test number 1 to test number 3, the Cu content of the Zn-Ni alloy plating layer was 0.00%, which means no Cu was contained. Therefore, the hardnesses Hv were less than 470, resulted in poor galling resistances.

In test number 16, test number 18, and test number 19, the Cu contents of the Zn-Ni alloy plating layers were more than 4.5% by mass. Therefore, the L values were less than 50, and the appearances were poor.

As seen from the above, the embodiment according to the present invention has been described. However, the aforementioned embodiment is merely an example for practicing the present invention. Therefore, the present invention is not limited to the previously-mentioned embodiment, and the previously-mentioned embodiment can be modified and practiced as appropriate without departing from the scope of the present invention.

### REFERENCE SIGNS LIST

- 3: pin
- 4: box
- 31, 41: thread part
- 32, 42: metal seal part
- 33, 43: shoulder part
- 34, 44: contact surface
- 100: Zn-Ni alloy plating layer
- 200: lubricating coating

## Claims

1. A threaded connection for pipe comprising a pin and a box each of which includes a contact surface including a thread part, a metal seal part, and a shoulder part, the threaded connection comprising
a Zn-Ni alloy plating layer on the contact surface of at least one of the pin and the box, wherein
the Zn-Ni alloy plating layer contains 4.5% by mass or less (zero excluded) of Cu.

2. The threaded connection for pipe according to claim 1, wherein
the Zn-Ni alloy plating layer contains 0.05 to 4.5% by mass of Cu.

3. The threaded connection for pipe according to claim 1 or claim 2, wherein the Zn-Ni alloy plating layer has a thickness of 1 to 20 µm.

4. The threaded connection for pipe according to any one of claims 1 to 3, further comprising a lubricating coating on the contact surface of at least one of the pin and the box, or on the Zn-Ni alloy plating layer.

5. A method for producing a threaded connection for pipe comprising a pin and a box each of which includes a contact surface including a thread part, a metal seal part, and a shoulder part, the method comprising the steps of:
preparing the pin, the box, and a plating solution that contains a zinc ion, a nickel ion, and a copper ion, the concentration of the copper ion being 1 g/L or less (zero excluded); and
forming a Zn-Ni alloy plating layer by electroplating bringing the plating solution into contact with the contact surface of at least one of the pin and the box.
